# FASCICULE DE BREVET EUROPEEN

(11) **EP 2 075 413 B1**
(45) Date de publication et mention de la délivrance du brevet: **26.10.2011**
(21) Numéro de dépôt: 07124069.1
(22) Date de dépôt: 26.12.2007
(51) Int. Cl.: F01D 9/04, F04D 29/54

(54) **Dispositif de rigidification du stator d'une turbomachine et application aux moteurs d'aeronef**
Vorrichtung zur Versteifung eines Stators einer Strömungsmaschine und deren Anwendung in Luftfahrzeugmotoren
Device for rigidifying the stator of a turbomachine and application to aircraft engines

(43) Date de publication de la demande: 01.07.2009
(73) Titulaire: Techspace Aero, 4041 Milmort - Herstal (BE)
(72) Inventeur: Cortequisse, Jean-François, Gérard, Jacques, 3870 Heers (BE)
(74) Mandataire: Ilgart, Jean-Christophe

(56) Documents cités:
- EP-A- 1 426 559
- GB-A- 2 226 600
- US-A1- 2006 275 110

## Description

L'invention concerne le domaine des turbomachines et en particulier celles constituant les moteurs d'aéronef, tels que les turboréacteurs.

A ce jour, les évolutions des codes de calculs aérodynamiques permettant des calculs tridimensionnels conduisent à définir des profils d'aubages de turbomachines très minces avec, par conséquent, des rigidités beaucoup plus faibles dans l'ensemble des directions de l'espace. L'utilisation de matériaux plus légers (matériaux composites de manière non exhaustive) conduit également à des rigidités beaucoup plus faibles des aubes dans l'ensemble des directions de l'espace. En conditions nominales et surtout exceptionnelles de fonctionnement de la turbomachine, comme les phénomènes de pompage et de décrochage, ces diminutions de rigidité sont telles que, sous l'effet de la pression aérodynamique des écoulements sur les aubages, il apparait des débattements axiaux importants en pied d'aubage.

Aussi, le jeu axial prédéfini entre les pieds de stator et ceux du rotor est surdimensionné de manière à éviter tout contact axial entre le stator et le rotor de la turbomachine. Ce surdimensionnement conduit à un encombrement axial plus important pour une turbomachine ayant des aubages de rigidité moindre.

Le document US 2006/0275110 divulgue une structure de compresseur 14 d'un moteur d'aéronef 1 entre le compresseur basse pression 8 et le compresseur haute pression 9 dans laquelle les bras de carter 15, 16 reliant le carter intérieur 3 au carter extérieur 4 ont un profil d'aube.

Le document GB 2 226 600 divulgue une structure d'un moteur d'aéronef 10 dans laquelle des bras 64 profilés solidarisent le carter intérieur 66 au carter extérieur 68 en aval du compresseur 20 et du rotor.

Le document EP 1 426 559 concerne le dernier étage statorique d'un compresseur axiale basse pression 1 et cherche à éviter un contact axial entre l'étage d'aubes 30 de stator et le carter intermédiaire 6: il divulgue une solution avec un élastomère prolongeant la partie métallique de la virole intérieure 4 afin d'entrer en contact avec le carter intermédiaire 6.

Un but de l'invention est donc de proposer une turbomachine avec débattements axiaux en pied d'aubage plus faible et ce, afin de la rendre plus compacte axialement et de diminuer sa masse.

En outre, dans la conception récente des moteurs d'avion, est apparu un dispositif appelé découpleur qui permet d'alléger la masse du moteur. Ce dispositif découpleur a pour fonction, en cas de perte d'aube fan, de libérer radialement le palier le plus proche de cette dernière pour permettre à l'arbre d'entrainement d'avoir un mouvement de précession (c'est-à-dire de lui permettre de continuer à tourner sur lui-même tout en se déportant radialement par rapport à l'axe du moteur) et par là, d'éviter à des efforts de balourd de remonter vers la structure de l'avion via celle du moteur.

Le déclenchement du découpleur conduit à un contact important rotor - stator en cas de déclenchement de ce dispositif. On peut constater ainsi un déplacement de la tête de l'arbre de plusieurs cm alors que les jeux en bout d'aube sont de quelques mm. Afin d'assurer l'intégrité de la structure du moteur, il est demandé d'avoir la rigidité radiale du stator la plus faible possible en cas de déclenchement de ce dispositif découpleur, afin de dissiper l'énergie.

Un autre but de l'invention est donc de proposer un moteur d'aéronef dont le stator présente une rigidité radiale minimale en cas de déclenchement du dispositif découpleur.

Pour ce faire, l'invention a pour objet, une turbomachine comprenant un stator, un rotor agencé intérieurement au stator, le stator comprenant au moins une virole intérieure, au moins une virole extérieure et au moins un étage d'une pluralité X d'aubes fixes agencé chacun entre les viroles intérieure et extérieure, le stator comprenant en outre une pluralité P (P<X) de profilés formant raidisseurs agencés sur l'étage d'aubes en étant répartis à sa périphérie et individuellement entre deux aubes consécutives, les raidisseurs étant fixés aux viroles intérieure et extérieure afin d'augmenter la rigidité axiale et radiale du stator en fonctionnement normal de la turbomachine.

Par fonctionnement normal de la turbomachine, il faut comprendre ici et dans le cadre de l'invention, les conditions nominales du fonctionnement sans dégradation physique de tout ou partie de la turbomachine, telle que par exemple la rupture d'une aube, et sans déclenchement de dispositif découpleur dans le cas où la turbomachine constitue un moteur d'avion.

Selon l'invention, les raidisseurs répartis à la périphérie de l'étage d'aubes compensent la moindre rigidité axiale et radiale de celle-ci et permettent donc de ne pas avoir à prévoir un surdimensionnement du jeu axial entre les parties du rotor en amont et ledit stator. Il est ainsi possible de dimensionner une turbomachine de manière à ce qu'elle soit moins encombrante et également de réduire sa masse.

Avantageusement, le stator comprend des aubes à incidence variable et/ou à profil variable entre elles afin de compenser les perturbations aérodynamiques générées par les P raidisseurs.

De préférence, les X aubes et les P raidisseurs sont fixés à la virole intérieure selon un procédé de même nature.

Avantageusement, les X aubes d'un même étage du stator sont différentes : les profils des aubes peuvent être alors calés différemment entre eux ou ceux des aubes du stator de part et d'autre de chaque raidisseur P peuvent être différents des profils des autres aubes d'un même étage.

Dans la construction selon laquelle, la virole intérieure est réalisée en plusieurs segments, la fixation entre les segments est avantageusement réalisée par l'intermédiaire des P raidisseurs.

L'invention concerne également un moteur d'aéronef constitué par une turbomachine décrite précédemment.

Pour les moteurs d'aéronef qui comprennent un dispositif découpleur, la fixation des P raidisseurs avec la virole extérieure est alors avantageusement fusible afin de réduire la rigidité radiale du stator en cas de contact entre le rotor et la virole intérieure une fois le découpleur déclenché.

Selon l'invention, on résout ainsi le problème de minimisation de la rigidité radiale du stator en cas de déclenchement du découpleur à moindre coût, seule une liaison fusible étant à prévoir lors de la conception du moteur.

Selon une variante de réalisation, la fixation fusible de chaque raidisseur avec la virole extérieure du stator est réalisée par goupillage du raidisseur avec la virole extérieure.

Selon une autre variante de réalisation selon laquelle le stator comprend une virole extérieure monobloc et n viroles intérieures munies chacune d'un étage d'aubes, la fixation fusible de chaque raidisseur avec la virole extérieure du stator est réalisée par montage serré du raidisseur dans un trou débouchant pratiqué dans la virole extérieure.

Le stator selon l'invention constitue avantageusement un stator de compresseur.

La pluralité de raidisseurs selon l'invention peut être ainsi implantée dans la veine d'un compresseur axial basse pression d'un moteur d'avion.

Les domaines d'application de l'invention sont nombreux et concernent de manière générale, tous les types de stators d'une turbomachine.

Plus particulièrement, l'invention s'applique à tous les stators :
- des turbomachines embarquées, applications dans lesquelles la masse est un paramètre critique ;
- des turbomachines des moteurs d'aéronefs et de fusée ;
- des compresseurs des moteurs d'aéronefs ;
- des compresseurs des moteurs d'aéronefs équipés de dispositifs découpleurs conduisant à un contact sévère rotor-stator en cas de déclenchement de ces dispositifs.

### BRÈVE DESCRIPTION DES DESSINS

Les figures 1A, 1B et 1C sont respectivement une vue schématique de face, une vue en perspective partielle et une vue en coupe de section longitudinale d'un mode de réalisation d'un moteur d'aéronef selon l'invention, en fonctionnement normal.
La figure 2 est une vue en perspective partielle d'un mode de réalisation d'un moteur d'aéronef selon l'invention montrant en traits pointillés l'état des pièces en fonctionnement normal et en traits continus l'état des pièces après déclenchement d'un dispositif découpleur.

### EXPOSÉ DÉTAILLÉ DE MODES DE RÉALISATION PARTICULIERS

Le moteur d'avion selon l'invention 1 comprend un stator 2, un rotor 3 agencé intérieurement au stator.

Sur le mode de réalisation illustré, le rotor 3 comprend un étage d'aubes 30 rotatif.

Le stator 2 représenté comprend plusieurs viroles intérieures 20 et une seule virole extérieure 21 monobloc. Il comprend également, pour chaque virole intérieure 20, un étage d'une pluralité X d'aubes 22 fixes agencé chacun entre une des viroles intérieure 20 et celle extérieure monobloc 21.

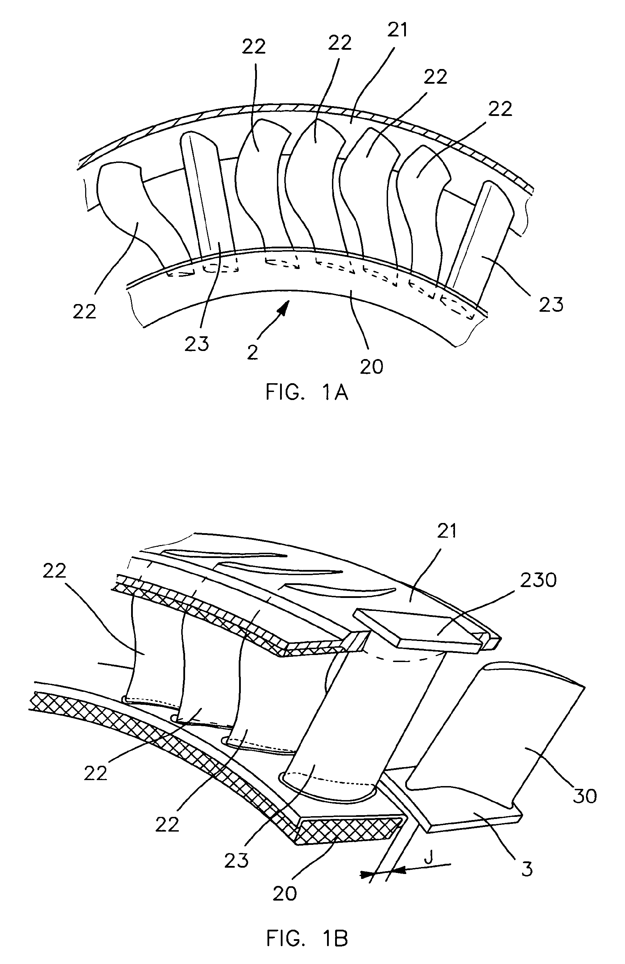

Dans le mode de réalisation illustré, le stator 2 comprend en outre une pluralité P (P<X) de profilés 23 formant raidisseurs agencés sur l'étage d'aubes en étant répartis uniformément à sa périphérie et individuellement entre deux aubes consécutives 22. Par exemple sur la portion angulaire du stator représenté sur la figure 1A, les raidisseurs 23 sont au nombre de P=2 en étant identiques entre eux et les aubes 22 sont au nombre de X=5 en étant identiques entre elles.

Comme représenté, les raidisseurs sont fixés aux viroles intérieure 20 et extérieure 21 : ils permettent selon l'invention d'augmenter la rigidité axiale et radiale du stator en fonctionnement normal de du moteur d'avion 1.

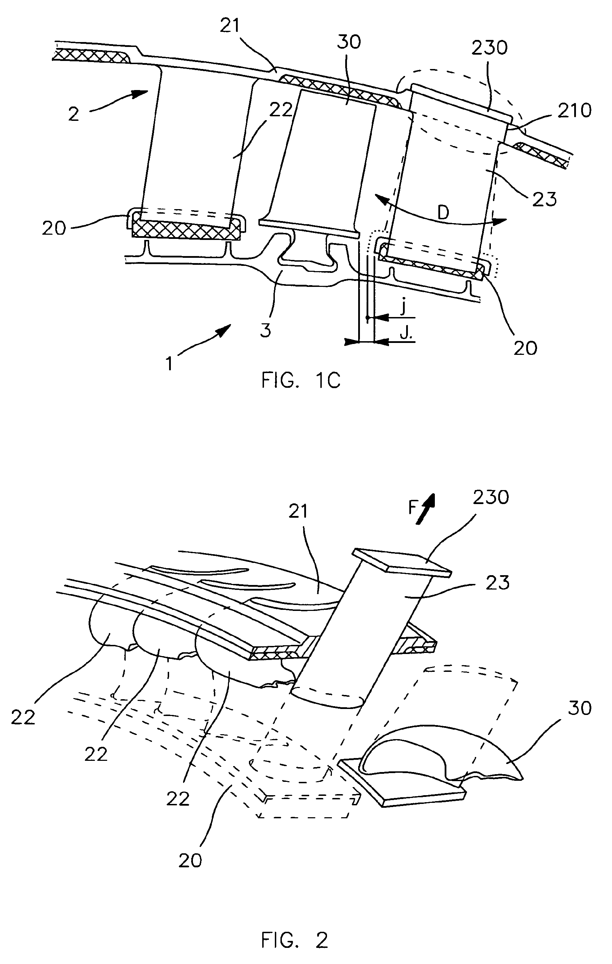

Les raidisseurs 23 assurent chacun une liaison mécanique entre la virole extérieure 21 et les viroles intérieures 20 en limitant ainsi les déplacements de ces dernières en fonctionnement normal du moteur d'avion 1. Plus exactement, tel que représenté sur la figure 1C, les raidisseurs 23 permettent aux viroles intérieures 20 d'avoir un débattement limité D lors du fonctionnement normal du moteur. Ce débattement limité implique un jeu axial de fonctionnement réel j en pieds d'aubes entre les aubes 30 du rotor et la virole intérieure 20 limité, inférieur au jeu axial dimensionné J. Ce dernier J est donc grâce aux raidisseurs selon l'invention 23 inférieur à celui surdimensionné prévu entre un étage d'aubes de stator selon l'état de l'art antérieur non muni de raidisseurs 23.

Le montage des raidisseurs 23 avec la virole monobloc extérieure 21 est prévu d'être réalisé avec une liaison fusible 23 ,230 (figure 1C). Dans le mode réalisation illustré, la liaison fusible est réalisée par un serrage par montage à force du raidisseur 23 dans un trou débouchant 210 de formes complémentaires prévu à cet effet dans la virole extérieure 21. Un autre type de liaison fusible peut être prévu : il peut s'agir d'un goupillage.

Tel que représenté, le raidisseur présente à son extrémité en contact avec la partie supérieure de la virole extérieure 21 une plaque 230 de plus grandes dimensions avant montage que le trou débouchant 210 (figure 1C), ce qui bloque le déplacement du raidisseur 23 vers le rotor 3 en fonctionnement normal du moteur après montage.

En cas de déclenchement d'un dispositif découpleur dans le moteur d'avion (c'est-à-dire lors d'un contact sévère entre le rotor et le stator), il se peut que les aubes 22 du stator et celles 30 du rotor 3 s'écrasent (voir traits pleins de la figure 2), la liaison fusible 210,230 des raidisseurs 23 selon l'invention limite ou supprime alors la rigidité radiale du stator 2. En effet, chaque raidisseur 23 peut alors librement se déplacer selon la flèche F de la figure 2 et passer au travers de la virole extérieure 21.

Les raidisseurs 23 selon l'invention peuvent être en acier, titane, alu ou composite.

Tel qu'illustré, les raidisseurs 23 sont fixés au niveau des viroles intérieure 20 de la même manière que les aubes 22.

Les avantages de l'invention qui viennent d'être décrite sont nombreux :
- réduction de l'encombrement axial de la turbomachine grâce à la diminution des jeux axiaux rotor/stator en pied des aubages ;
- en conséquence, diminution de la masse de la turbomachine grâce à la diminution de longueur, ce qui s'avère très important pour les applications aéronautiques et spatiales embarquées ;
- utilisation possible d'aubages encore plus optimisés d'un point de vue aérodynamique, du fait que certaines contraintes liées à la rigidité et la tenue mécanique du stator sont désormais supportées par les raidisseurs selon l'invention et, le cas échéant leur liaison fusible ;
- utilisation possible de matériaux moins rigides pour la réalisation des aubes.

## Revendications

1. Moteur d'aéronef (1) comprenant un stator (2), un rotor (3) comprenant un étage d'aubes (30) rotatif et agencé intérieurement au stator (2) et un dispositif découpleur, le stator comprenant au moins une virole intérieure (20), au moins une virole extérieure (21) et au moins un étage d'une pluralité X d'aubes (22) fixes agencé chacun entre les viroles intérieure (20) et extérieure (21), le stator comprenant en outre une pluralité P, avec P<X, de profilés formant raidisseurs (23) agencés sur l'étage d'aubes en étant répartis à sa périphérie et individuellement entre deux aubes consécutives, les raidisseurs (23) étant fixés aux viroles intérieure (20) et extérieure (21) afin d'augmenter la rigidité axiale et radiale du stator en fonctionnement normal de la moteur d'aéronef et de permettre aux viroles intérieures d'avoir un débattement limité lors du fonctionnement normal de la moteur d'aéronef impliquant un jeu axial de fonctionnement réel en pied d'aubes entre les aubes (30) du rotor et la virole intérieure (20) limité,
dans lequel la fixation des P raidisseurs avec la virole extérieure (21) est fusible afin de réduire la rigidité radiale du stator en cas de contact entre le rotor et la virole intérieure une fois le découpleur déclenché.

2. Moteur d'aéronef (1) selon la revendication 1, dans laquelle le stator comprend des aubes à incidence variable et/ou à profil variable entre elles afin de compenser les perturbations aérodynamiques générées par les P raidisseurs (23).

3. Moteur d'aéronef (1) selon la revendication 1 ou 2, dans laquelle les X aubes et les P raidisseurs sont fixés à la virole intérieure selon un procédé de même nature.

4. Moteur d'aéronef (1) selon la revendication 3, dans laquelle les X aubes d'un même étage du stator sont différentes.

5. Moteur d'aéronef (1) selon la revendication 3, dans laquelle les profils des aubes sont calés différemment entre eux.

6. Moteur d'aéronef (1) selon la revendication 3, dans laquelle les profils des aubes du stator de part et d'autre de chaque raidisseur P sont différents des profils des autres aubes d'un même étage.

7. Moteur d'aéronef (1) selon l'une quelconque des revendications précédentes, dans laquelle la virole intérieure est réalisée en plusieurs segments, la fixation entre les segments étant réalisée par l'intermédiaire des P raidisseurs.

8. Moteur d'aéronef (1) selon l'une des revendications 1 à 7, dans lequel la fixation fusible de chaque raidisseur avec la virole extérieure du stator est réalisée par goupillage du raidisseur avec la virole extérieure.

9. Moteur d'aéronef (1) selon l'une des revendications 1 à 7, le stator comprend une virole extérieure monobloc (21) et n viroles intérieures (20) munies chacune d'un étage d'aubes (22), la fixation fusible de chaque raidisseur (23) avec la virole extérieure (21) du stator est réalisée par montage serré du raidisseur dans un trou débouchant (210) pratiqué dans la virole extérieure (21).

10. Moteur d'aéronef selon l'une quelconque des revendications précédentes, dans lequel le stator constitue un stator de compresseur.

## Claims

1. Aircraft engine (1) comprising a stator (2), a rotor (3) comprising a rotary blade stage and arranged internally to the stator (2) and a decoupling device, the stator comprising at least one internal ferrule (20), at least one external ferrule (21) and at least one stage of a plurality X of fixed blades (22) each arranged between the internal (20) and external (21) ferrules, the stator also comprising a plurality P, with P<X, of profiled members forming stiffeners (23) arranged on the blade stage while being distributed at its periphery and individually between two consecutive blades, the stiffeners (23) being fixed to the internal (20) and external (21) ferrules in order to increase the axial and radial stiffness of the stator in normal operation of the turbomachine and to enable the internal ferrules to have a limited displacement during the normal functioning of the turbomachine involving a real operating axial clearance at the blade roots between the blades (30) of the rotor and the internal ferrule (20) which is limited,
in which the fixing of the P stiffeners with the external ferrule (21) is fusible in order to reduce the radial stiffness of the stator in the event of contact between the rotor and the internal ferrule once the decoupler is triggered.

2. Aircraft engine (1) according to claim 1, in which the stator comprises blades with variable incidence and/or variable profile compared with one another in order to compensate for the aerodynamic disturbances generated by the P stiffeners (23).

3. Aircraft engine (1) according to claim 1, in which the X blades and P stiffeners are fixed to the internal ferrule according to methods of the same nature.

4. Aircraft engine (1) according to claim 3, in which the X blades of the same stator stage are different.

5. Aircraft engine (1) according to claim 3, in which the profiles of the blades are fixed differently from one another.

6. Aircraft engine (1) according to claim 1, in which the profiles of the blades of the stator on each side of each stiffener P are different from the profiles on the other blades of the same stage.

7. Aircraft engine (1) according to any of the previous claims, in which the internal ferrule is produced in several segments, the fixing between the segments being achieved by means of the P stiffeners.

8. Aircraft engine (1) according to any of claims 1 to 7, in which the fusible fixing of each stiffener with the external ferrule of the stator is achieved by pinning the stiffener with the external ferrule.

9. Aircraft engine according to any of claims 1 to 7, the stator comprises a single-piece external ferrule and n internal ferrules each provided with a blade stage, the fusible fixing of each stiffener with the external ferrule of the stator is achieved by tight mounting of the stiffener in a through hole formed in the external ferrule.

10. Aircraft engine according to any of the previous claims, in which the stator constitutes a compressor stator.

## Patentansprüche

1. Flugzeugtriebwerk (1) umfassend einen Stator (2), einen Rotor (3), der eine umlaufende Schaufelstufe (30) umfasst und innerhalb des Stators (2) angeordnet ist, sowie eine Entkopplungsvorrichtung, wobei der Stator wenigstens einen Innenring (20), wenigstens einen Außenring (21) und wenigstens eine Stufe aus einer Vielzahl X von Leitschaufeln (22) umfasst, die jeweils zwischen dem Innenring (20) und dem Außenring (21) angeordnet ist, wobei der Stator ferner eine Vielzahl P, mit P<X, von Profilen umfasst, die Versteifungen (23) bilden, welche an der Schaufelstufe angeordnet und dabei an deren Umfang und zwischen zwei aufeinander folgenden Schaufeln einzeln verteilt sind, wobei die Versteifungen (23) an dem Innenring (20) und an dem Außenring (21) befestig sind, um die axiale und radiale Steifigkeit des Stators im Normalbetrieb des Flugzeugtriebwerks zu erhöhen und um den Innenringen zu ermöglichen, während des Normalbetriebs des Flugzeugtriebwerks einen begrenzten Bewegungsbereich zu haben, der ein begrenztes axiales Realbetriebsspiel am Schaufelfuß zwischen den Schaufeln (30) des Rotors und dem Innenring (20) impliziert,
wobei die Befestigung der P Versteifungen an dem Außenring (21) als Sollbruchstelle ausgebildet ist, um die radiale Steifigkeit des Stators im Fall eines Kontakts zwischen dem Rotor und dem Innenring zu verringern, sobald der Entkoppler ausgelöst ist.

2. Flugzeugtriebwerk (1) nach Anspruch 1, wobei der Stator Schaufeln mit veränderlichem Anstellwinkel und/oder mit veränderlichem Profil untereinander umfasst, um die durch die P Versteifungen (23) erzeugten aerodynamischen Störungen zu kompensieren.

3. Flugzeugtriebwerk (1) nach Anspruch 1 oder 2, wobei die X Schaufeln und die P Versteifungen nach einem Verfahren gleicher Art an dem Innenring befestigt sind.

4. Flugzeugtriebwerk (1) nach Anspruch 3, wobei die X Schaufeln einer gleichen Stufe des Stators unterschiedlich sind.

5. Flugzeugtriebwerk (1) nach Anspruch 3, wobei die Profile der Schaufeln unterschiedlich untereinander festgesetzt sind.

6. Flugzeugtriebwerk (1) nach Anspruch 3, wobei die Profile der Schaufeln des Stators auf beiden Seiten einer jeden Versteifung P sich von den Profilen der anderen Schaufeln einer gleichen Stufe unterscheiden.

7. Flugzeugtriebwerk (1) nach einem der vorhergehenden Ansprüche, wobei der Innenring aus mehreren Segmenten ausgebildet ist, wobei die Befestigung zwischen den Segmenten mittels der P Versteifungen realisiert ist.

8. Flugzeugtriebwerk (1) nach einem der Ansprüche 1 bis 7, wobei die Sollbruchbefestigung einer jeden Versteifung an dem Außenring des Stators **dadurch** realisiert ist, dass die Versteifung mit dem Außenring verstiftet ist.

9. Flugzeugtriebwerk (1) nach einem der Ansprüche 1 bis 7, wobei der Stator einen einstückigen Außenring (21) und n Innenringe (20), die jeweils mit einer Stufe von Schaufeln (22) ausgestattet sind, umfasst, wobei die Sollbruchbefestigung einer jeden Versteifung (23) an dem Außenring (21) des Stators durch Einlassen der Versteifung in ein in dem Außenring (21) ausgebildetes durchgehendes Loch (210) realisiert ist.

10. Flugzeagtriebwerk nach einem der vorhergehenden Ansprüche, wobei der Stator einen Stator eines Verdichters bildet.
